# EUROPEAN PATENT SPECIFICATION

(11) **EP 1 944 630 B1**
(45) Date of publication and mention of the grant of the patent: **22.06.2011**
(21) Application number: 07112840.9
(22) Date of filing: 20.07.2007
(51) Int. Cl.: G02B 6/00

(54) **Backlight having all-in-one type light guide plate and method of manufacturing all-in-one type light guide plate**
Hintergrundbeleuchtung mit einteiliger Lichtleiterplatte und Verfahren zur Herstellung einer einteiligen Lichtleiterplatte
Rétroéclairage doté d'une plaque de guidage lumineuse de type tout en un et procédé de fabrication de la plaque de guidage lumineuse de type tout en un

(30) Priority: 09.01.2007 KR 20070002647
(43) Date of publication of application: 16.07.2008
(73) Proprietor: Samsung Electronics Co., Ltd., Gyeonggi-do 443-742 (KR)
(72) Inventor: Lee, Hong-seok, Giheung-gu, Yongin-si Gyeonggi-do (KR); Yoon, Eung-yeoul, Giheung-gu, Yongin-si Gyeonggi-do (KR)
(74) Representative: Anderson, James Edward George

(56) References cited:
- US-A- 5 779 337
- US-A1- 2005 248 961
- US-A1- 2005 270 798
- US-B1- 6 425 673

## Description

### BACKGROUND OF THE INVENTION

Apparatuses and methods consistent with the present invention relate to a backlight and a method of manufacturing a light guide plate, and more particularly, to a backlight having an all-in-one type light guide plate and a method of manufacturing the all-in-one type light guide plate.

Typically, backlights are used to illuminate flat displays, for example, liquid crystal displays, and are mainly classified as direct light emitting type backlights or light guide plate type backlights depending on the positions of the light sources. Light guide plate type backlights may be also classified as flat type backlights or wedge type backlights.

In direct light emitting type backlights, a light source is installed close below a light exit surface, thereby enabling a surface light emission. Advantageously, direct light emitting type backlights include more light sources in comparison with light guide plate type backlights, thus increasing light brightness and widening the light exit surface. However, in direct light emitting type backlights, power consumption is higher because many light sources are used. Also, it is difficult to realize thin film direct light emitting type backlights because the shape of light sources is reflected, and thus light uniformity is severely reduced.

In light guide plate type backlights, a light guide plate is employed to guide light to a light exit surface. Light sources are disposed on a side surface of the light guide plate. The number of light sources is limited according to a length of a side surface of the light guide plate. Advantageously, thin film light guide plate type backlights can be realized easily. On the other hand, a process for making light brightness uniform on the entire light exit surface is complicated in comparison with direct light emitting type backlights.

Flat type backlights are used in monitors or when high-brightness is required. In flat type backlights, the light sources may be fixed to two or all four edges of the light guide plate. To increase light brightness when a plurality of light sources are used, an edge thickness of the light guide plate should be uniform.

Wedge type backlights are used in devices, such as notebook computers, in which it is difficult to use several light sources due to limited power resources. Only one surface constituting a light incident portion is widened and other surface is narrowed, to thereby reduce the weight of the backlight.

Light sources used in light guide plate type backlights may be line light-sources and point light-sources. A cold cathode fluorescent lamp (CCFL) may be used as a line light-source. In this case, electrodes at both ends of the CCFL are installed within a pipe. A light emitting diode (LED) may be used a point light-source. Advantageously, the CCFL emits strong white light having high-brightness and high-uniformity, and allows design enlargement. However, the CCFL is operated via a high frequency alternating current (AC) signal and at a narrow range of an operation temperature. Meanwhile, the performance of the LED is inferior to that of the CCFL in view of light brightness and uniformity. However, the LED has advantages of operating via a direct current (DC) signal and at a wide range of operation temperatures. In addition, LEDs have long lifespans and can be used to make a thin film direct light emitting type backlight.

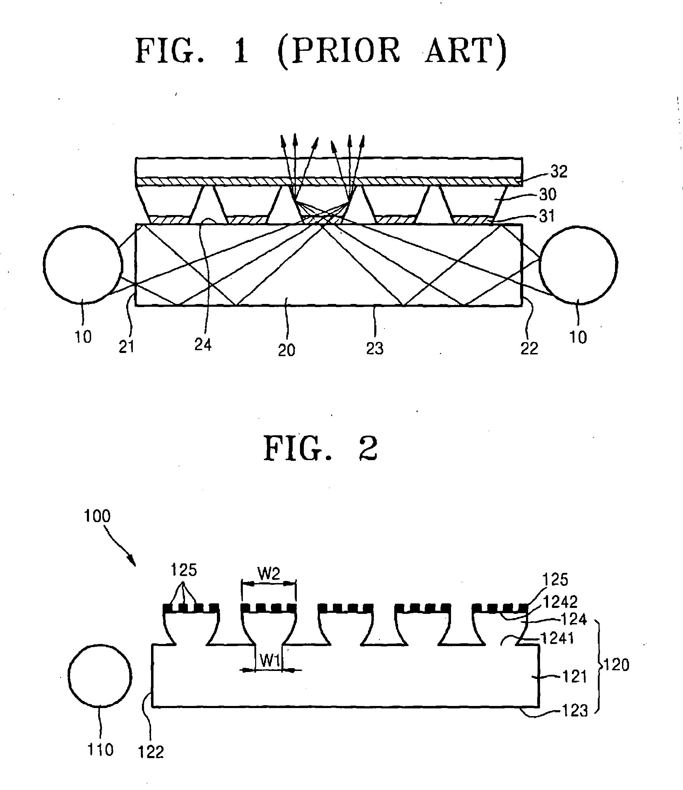

FIG. 1 is a sectional view schematically illustrating a conventional side emitting type backlight.

Referring to FIG. 1, line light-sources 10 are installed at both sides 21 and 22 of a light guide plate 20. A light path converter 23 is formed on a lower surface of the light guide plate 20 to guide light incident from the line light-sources 10.

A plurality of prism shaped structures 30 are formed on an upper side of the light guide plate 20 to diffuse the light coming out from an exit surface 24 into the upper side of the light guide plate 20. The prism shaped structures 30 are fixed to the upper side of the light guide plate 20 by an adhesive layer 31.

The light incident from the line light-sources 10 into the light guide plate 20 is guided to the exit surface 24 of the light guide plate 20 by the light path converter 23. The light passes through an adhesive layer 31 and diffuses to the upper side of the light guide plate 20 through the prism shaped structures 30.

Since the prism shaped structures 30 are fixed to the upper side of the light guide plate 20 by the adhesive layer 31, the light incident into the prism shaped structures 30 must pass through the adhesive layer 31. Thus, the adhesive layer 31 affects the transmission of light. In particular, since the backlight performance depends on an adhering degree of the adhesive force, the adhesive layer 31 should be removed to increase the backlight performance.

US 2005/0270798 A1 discloses a brightness enhancing film comprising a linear array of light concentrators. Each of the light concentrators has input and output apertures, and a pair of curved side walls linking the apertures. It is disclosed that the film may be injection or extrusion molded.

US 5779337 and US 2005/0248961 A1 each disclose light guiding devices having projections, grooves or prismatic structures for emitting light.

### SUMMARY OF THE INVENTION

According to an aspect of the present invention, there is provided a light guiding device, comprising: a light guide plate for internally reflecting light incident thereon; a plurality of prism-shaped structures integrally formed on the light guide plate, the prism-shaped structures being for further internally reflecting light reflected by the light guide plate and emitting the further-reflected light, each of the prism-shaped structures comprising an upper region, from which the further-reflected light is emitted, and a lower region through which the light reflected by the light guide plate passes, the width of the lower region being smaller than a width of the upper region; and a plurality of diffusers integrally formed on the upper region of each of the prism-shaped structures.

According to another aspect of the present invention, there is provided a backlight including: a light source; and the light guiding device described above.

According to yet another aspect of the present invention, there is provided a method of manufacturing a light guiding device, the method comprising: forming a plurality of diffusers on a substrate; forming a sacrificial layer on the substrate on which the diffusers are formed; etching the sacrificial layer to form a plurality of prism-shaped portions, corresponding in shape to a plurality of prism-shaped structures of the light guiding device, on the sacrificial layer; forming the light guiding device by coating a material on the sacrificial layer and the prism-shaped portions, the light guiding device having the plurality of prism-shaped structures, each of the prism-shaped structures having a lower region width which is smaller than an upper region width; and separating the light guiding device from the sacrificial layer.

The etching of the sacrificial layer on the substrate may include partially filling an etched portion of the sacrificial layer with a filler to adjust a thickness of the prism shaped structure.

The etching of the sacrificial layer on the substrate may further include positioning a mask having a plurality of through-holes patterned in a predetermined pattern on the sacrificial layer, and irradiating UV light through the through-holes so that the prisms formed on the sacrificial layer have an oval cross section.

The etching of the sacrificial layer on the substrate may further include: positioning a mask having a plurality of through-holes patterned in a predetermined pattern on the sacrificial layer, and irradiating UV light inclined and symmetrically through the through-holes so that the prisms formed on the sacrificial layer have a trapezoidal cross section.

The sacrificial layer may include a hardening material, and the all-in-one type light guide plate comprises an elastic material.

The sacrificial layer and the all-in-one type light guide plate may each include an elastic material.

The sacrificial layer may include an elastic material, and the all-in-one type light guide plate comprises a hardening material.

Exemplary embodiments of the present invention may thus provide an all-in one type light guide plate according to claim 1 having improved performance by integrally forming a prism shaped structure on the all-in one type light guide plate, a backlight according to claim 7 having the all-in-one type light guide plate, and a method of manufacturing the all-in-one type light guide plate according to claim 8.

### BRIEF DESCRIPTION OF THE DRAWINGS

The above and other aspects and advantages of the present invention will become more apparent by the following detailed description of exemplary embodiments thereof with reference to the attached drawings in which:
FIG. 1 is a sectional view schematically illustrating a conventional side emitting type backlight;
FIG. 2 is a sectional view illustrating a backlight having an all-in-one type light guide plate according to an exemplary embodiment of the present invention;
FIG. 3 is a sectional view illustrating a backlight having an all-in-one type light guide plate according to another exemplary embodiment of the present invention;
FIGS. 4A through 4F are sectional views for illustrating a method of manufacturing an all-in-one type light guide plate according to an exemplary embodiment of the present invention;
FIG. 5 is a sectional view for illustrating a method of irradiating ultraviolet (UV) light on a sacrificial layer so as to form a prism, according to an exemplary embodiment of the present invention; and
FIG. 6 is a sectional view for illustrating a method of adjusting a thickness of the prism of FIG. 5, according to an exemplary embodiment of the present invention

### DETAILED DESCRIPTION OF EXEMPLARY EMBODIMENTS OF THE INVENTION

The present invention according to independent claims 1 and 8 will now be described more fully with reference to the accompanying drawings, in which exemplary embodiments of the invention are shown. These embodiments are provided so that this disclosure will be thorough and complete, and will fully convey the concept of the invention to those skilled in the art.

Referring to FIG. 2, a backlight 100 according to an embodiment of the present invention includes a light source 110 emitting light and an all-in-one type light guide plate 120.

The light source 110 is formed on a side surface 122 of the all-in-one type light guide plate 120, but the present invention is not limited thereto. That is, the light source 110 may be formed on any one of the four surfaces of the all-in-one type light guide plate 120.

The all-in-one type light guide plate 120 includes a light path converter 123 which is formed on a lower surface of a light guide plate 121, and a plurality of prism shaped structures 124 which totally reflect light to be emitted upwards, are integrally formed on a upper region of the light guide plate 121. A longitudinal section of the prism shaped structures 124 has a partially oval shape. A plurality of diffusers 125, which diffuse the light coming out from the prism shaped structures 124, are integrally formed on upper regions 1242 of the prism shaped structures 124. Accordingly, the light emitted from the light source 110 is incident into the light guide plate 121, is directed to the prism shaped structures 124 by the light path converter 123, passes through the prism shaped structures 124, and is diffused finely by the diffusers 125.

The prism shaped structures 124 include lower regions 1241 onto which the light is incident, and the upper regions 1242. A width W1 of the lower regions 1241 may be smaller than a width W2 of the upper regions 1242. A method of forming the prism shaped structures 124 will be described later.

The light source 110 is formed on one side surface 122 of the light guide plate 121. The light emitted from the light source 110 is incident onto the light guide plate 121 through the one side surface 122 of the light guide plate 121.

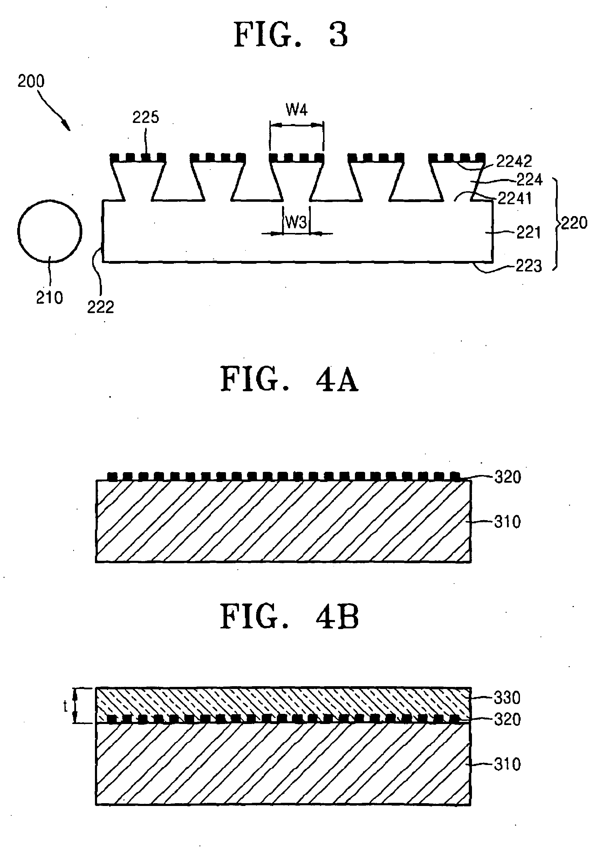

Referring to FIG. 3, a backlight 200 according to another embodiment of the present invention includes a light source 210 which emits light, and an all-in-one type light guide plate 220.

The light source 210 is formed on one side surface 222 of the all-in-one type light guide plate 220, but a position of the light source 210 in not limited thereto. That is, the light source 210 may be formed on at any one of the four surfaces of the all-in-one type light guide plate 220.

The all-in-one type light guide plate 220 includes a light path converter 223 which is formed on a lower surface of a light guide plate 221, and a plurality of prism shaped structures 224 which totally reflect light to be emitted upwards, and are integrally formed on a upper surface of the light guide plate 221. The prism shaped structures 224 may have a trapezoidal longitudinal section, unlike the prism shaped structures 124 illustrated in FIG. 2. A plurality of diffusers 225, which further diffuse the light coming out from the prism shaped structures 224, are integrally formed on each upper region 2242 of the prism shaped structures 224. Accordingly, when the light source 210 emits light, the light is incident onto the light guide plate 221, is directed to the prism shaped structures 224 by the light path converter 223, passes through the prism shaped structures 224, and is diffused finely by the diffusers 225.

The plural prism shaped structures 224 include lower regions 2241, onto which the light is incident, and upper regions 2242. A width (W3) of the lower regions 2241 may be smaller than a width (W4) of the upper regions 2242.

A method of forming the all-in-one type light guide plate 120 will now be described with reference to FIGS. 4A through 4F.

Referring to FIG. 4A, a plurality of diffusers 320 are formed on a substrate 310. The substrate 310 may be formed of SiO₂. The plural diffusers 320 are formed on the substrate 310 by irradiating UV light to the substrate 310 by a photomask, and developing an exposed portion by a developing solution to form the diffusers 320.

Referring to FIG. 4B, a photoresist having a predetermined thickness is coated on the substrate 310, on which the plural diffusers 320 are formed, to form the sacrificial layer 330. Here, because a thickness of the prism shaped structures 124 depends on a thickness (t) of the sacrificial layer 330, the thickness of the prism shaped structures 124 can be regulated by adjusting the thickness (t) of the sacrificial layer 330. For example, the thickness of the prism shaped structures 124 can be increased by increasing the thickness (t) of the sacrificial layer 330, and the thickness of the prism shaped structures 124 can be decreased by decreasing the thickness (t) of the sacrificial layer 330.

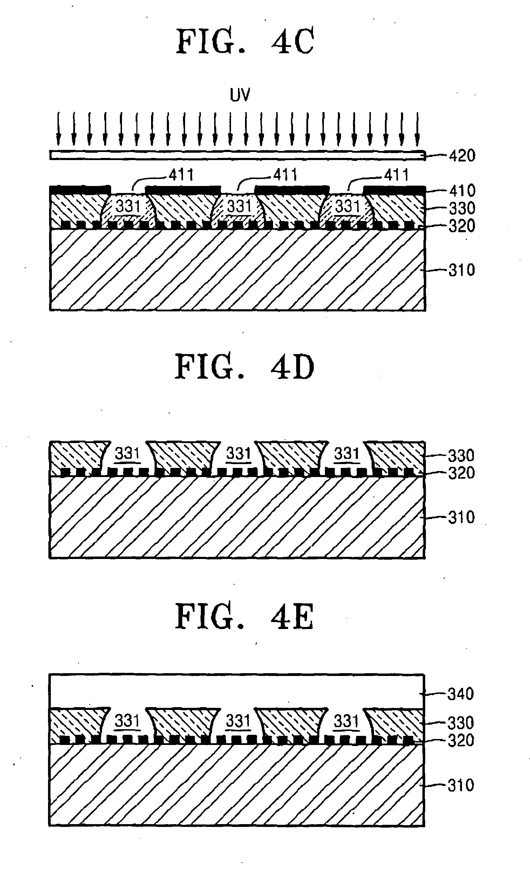

Referring to FIG. 4C, a photomask 410 having a plurality of through-holes 411 formed in a predetermined pattern is positioned on the sacrificial layer 330. Next, UV light is irradiated on the photomask 410. The UV light passes through the plural through-holes 411 and irradiates only some parts of the sacrificial layer 330. Here, a diffusion sheet 420, which is positioned on the photomask 410, diffuses the UV light. The UV light that passes through the plural through-holes 411 irradiates a plurality of portions 331. Here, a cross section of the portions 331 is partially oval, as illustrated in FIG. 4C. Without the diffusion sheet 420, the UV light would pass through the through-holes 411 perpendicularly. By using the diffusion sheet 420, the UV passes through the through-holes 411 and is diffused on the portions 331. Thereby, a cross section of the portions 331 is partially oval. Thus, the prism shaped structures 124 having the lower regions 1241 and the upper regions 1242 are formed by irradiating the portion 331 having a partially oval cross section and by regulating the thickness (t) of the sacrificial layer 330. Here, the width (W1) of the lower regions 1241 may be smaller than a width (W2) of the upper regions 1242 as illustrated in FIG. 2.

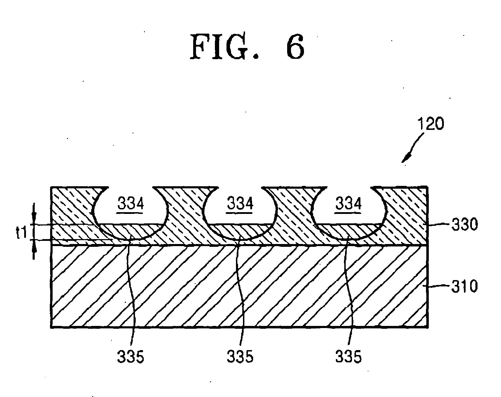

By increasing the thickness (t) of the sacrificial layer 330 and diffusing the UV light, a portion 334 having a fully oval or circular (not shown) cross section of is formed as illustrated in FIG. 6. Here, the widths W1 and W2 cannot be regulated to have desired values. Accordingly, the sacrificial layer 330 is coated to regulate the thickness (t) of the sacrificial layer 330 and make the width W1 smaller than the width W2.

Referring to FIG. 4D, the portions 331 are etched by using a developing solution in order to remove the photoresist therefrom and expose the plural diffusers 320.

Referring to FIG. 4E, an elastic material 340 is coated and dried on the sacrificial layer 330 and the plural diffusers 320. Thus, the elastic material 340 is molded according to the shape of the sacrificial layer 330 and the plural diffusers 320. Here, the elastic material 340 may be polydimethylsiloxane (PDMS).

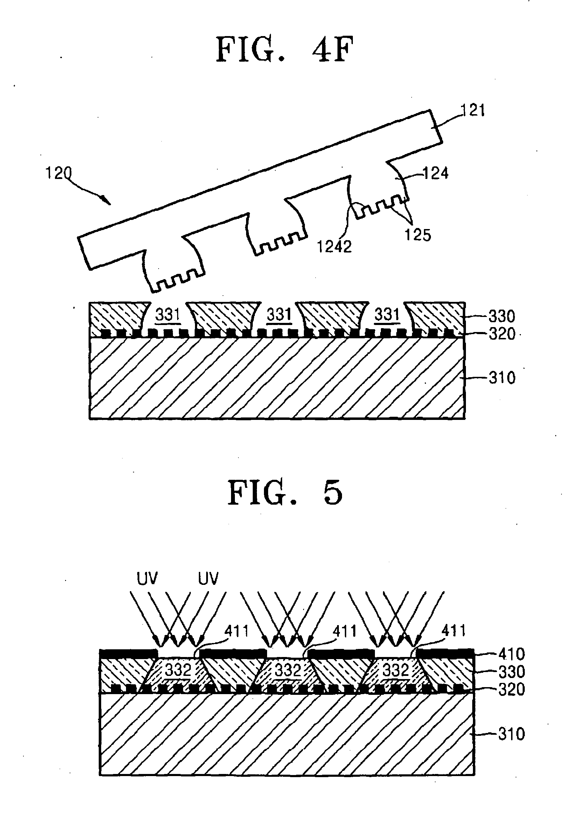

Referring to FIG. 4F, the all-in-one type light guide plate 120, which is molded in an operation of FIG. 4E using the elastic material 340, is separated from the sacrificial layer 330. Here, since the material 340 is elastic, the all-in-one type light guide plate is easily separated from the sacrificial layer 330. The separated all-in-one type light guide plate 120 has a structure in which the plurality of prism shaped structures 124 are integrally formed on the light guide plate 121 and the plurality of diffusers 125 are integrally formed on the upper regions 1242 of the prism shaped structures 124. After separation, the all-in-one type light guide plate 120 may be a rigid structure.

The sacrificial layer 330 may be formed of an elastic material, and the all-in-one type light guide plate 120 may be also formed for an elastic material. In this way, when the sacrificial layer 330 and the all-in-one type light guide plate 120 are formed of elastic materials, the all-in-one type light guide plate 120 may be much more easily separated from the sacrificial layer 330.

In addition, the sacrificial layer 330 may be formed of an elastic material, by the all-in-one type light guide plate 120 may be formed of an inelastic material (this may be hardened by ultraviolet rays or by heat). Although the material constituting the all-in-one type light guide plate 120 is hardened, since the material constituting the sacrificial layer 330 is elastic, the all-in-one type light guide plate 120 can be separated from the sacrificial layer 330.

The all-in-one type light guide plate 120 can be mass-produced by using the substrate 310 and the sacrificial layer 330, through which the portions 331 are formed, as molds, and by repeating operations of FIGS. 4E and 4F.

Referring to FIG. 5, a method of irradiating UV light for forming the all-in-one type light guide plate 220 is disclosed according to an embodiment of the present invention. UV light is irradiated through a plurality of through-holes 411 of a mask 410 as symmetrically inclined with respect to the mask 410. Although not shown in FIG. 5, the UV light is also irradiated through the through-holes 411 as symmetrically inclined to the front and back with respect to the mask 410, using the same irradiating method as described above. Thus, a cross section of the exposed portion 332 has a trapezoidal longitudinal section. Thus, the prism shaped structures 224 having the lower regions 2241 and the upper regins 2242 are formed. Here, the width (W4) of the upper regions 2242 is wider than the width (W3) of the lower regions 2241 as illustrated in FIG. 3.

In the all-in-one type light guide plate 220, since the UV light is irradiated diagonally on the through-holes 411, the width W4 is always wider than the width W3. Accordingly, the all-in-one type light guide plate 220 may be molded in a desired shape without regulating the thickness of the sacrificial layer 330 unlike for the case of the all-in-one type light guide plate 120.

Referring to FIG. 6, to form the all-in-one type light guide plate 120 without regulating the thickness of the sacrificial layer 330 to adjust the widths W1 and W2, the portions 331 having an oval cross section are formed and then filed with a filler 335, to thus be molded to a desired shape in operation of FIG. 4B.

Here, a thickness t1 of the filler 335 is regulated so that the width W2 may be wider than the width W1.

To form the all-in-one type light guide plate 120 the same method as explained with reference to FIGS. 4A thorough 4F may be used except for the operation of FIG. 6.

The backlight 100 having the all-in-one type light guide plate 120 may have the following advantages.

First, the backlight can be mass-produced by integrally forming the prism shaped structures on the light guide plate.

Second, light properties can be improved since the prism shaped structures are integrally formed on the light guide plate without a boundary line between the prism shaped structures and the light guide plate.

Third, by regulating the width t of the sacrificial layer, the prism shaped structures can be molded to a desired shape.

Fourth, by forming the diffusers on the light exit regions of the prism shaped structures, light properties can be regulated.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A light guiding device, comprising:
a light guide plate (121, 221) for internally reflecting light incident thereon; and
a plurality of prism-shaped structures (124, 224) integrally formed on the light guide plate (121, 221), the prism-shaped structures (124, 224) being for further internally reflecting light reflected by the light guide plate (121, 221) and emitting the further-reflected light, each of the prism-shaped structures (124, 224) comprising an upper region, from which the further-reflected light is emitted, and a lower region through which the light reflected by the light guide plate (121, 221) passes, a width (W1, W3) of the lower region being smaller than a width of the upper region (W2, W4),
wherein the device is **characterized in that** it further comprises a plurality of diffusers (125, 225) integrally formed on the upper region of each of the prism-shaped structures (124, 224).

2. The light guiding device of claim 1, wherein the light guide plate (121, 221) and the prism-shaped structures (124, 224) are made of an elastic material.

3. The light guiding device of claim 1 or 2, wherein the light guide plate (121, 221) and the prism-shaped structures (124, 224) are made of a hardening material.

4. The light guiding device of claim 2, wherein the elastic material is polydimethylsiloxane.

5. The light guiding device of any preceding claim, wherein each of the prism-shaped structures (124) has an at least partially oval cross-section.

6. The light guiding device of any of claims 1 to 4, wherein each of the prism-shaped structures (224) has a trapezoidal cross-section.

7. A backlight comprising a light source (210) and the light guiding device of any preceding claim.

8. A method of manufacturing a light guiding device, the method comprising:
forming a plurality of diffusers (320) on a substrate (310);
forming a sacrificial layer (330) on the substrate (310) on which the diffusers (320) are formed;
etching the sacrificial layer (330) to form a plurality of prism-shaped portions (331, 332, 334), corresponding in shape to a plurality of prism-shaped structures (124, 224) of the light guiding device, on the sacrificial layer (330);
forming the light guiding device by coating a material (340) on the sacrificial layer (330) and the prism-shaped portions (331, 332, 334), the light guiding device having the plurality of prism-shaped structures (124, 224), each of the prism-shaped structures (124, 224) having a lower region width which is smaller than an upper region width; and
separating the light guiding device from the sacrificial layer (330).

9. The method of claim 8, wherein the forming the plurality of prism-shaped portions (334) further comprises partially filling an etched portion of the sacrificial layer (330) with a filler (335) to adjust a thickness of the prism-shaped portions (334).

10. The method of claim 8, wherein the forming the prism-shaped portions (334) comprises:
positioning a mask (420) having a plurality of through-holes patterned in a predetermined pattern on the sacrificial layer (330), and
irradiating UV light through-holes so that the prism-shaped portions (331) formed on the sacrificial layer (330) have an at least partially oval-shaped cross section.

11. The method of claim 8, wherein forming the plurality of prism-shaped portions (332) comprises:
positioning a mask (410) having a plurality of through-holes patterned in a predetermined pattern on the sacrificial layer (330), and
irradiating UV light inclined and symmetrically through the through-holes so that the prism-shaped portions (332) formed on the sacrificial layer (330) have a trapezoidal shaped cross section.

12. The method of claim any of claims 9 to 11, wherein the light guiding device is made of an elastic material.

13. The method of any of claims 9 to 11, wherein the light guiding device is made of a hardening material.

14. The method of any of claims 9 to 13, wherein the sacrificial layer is made of an elastic material.

## Patentansprüche

1. Lichtleitervorrichtung, umfassend:
eine Lichtleiterplatte (121, 221) zum internen Reflektieren von Licht, das auf sie einfällt, und
eine Mehrzahl von prismenförmigen Strukturen (124, 224), die auf der Lichtleiterplatte (121, 221) integral ausgebildet sind, wobei die prismenförmigen Strukturen (124, 224) dazu vorgesehen sind, dass sie von der Lichtleiterplatte (121, 221) reflektiertes Licht intern weiter reflektieren und das weiterreflektierte Licht emittieren, wobei jede der prismenförmigen Strukturen (124, 224) einen oberen Bereich, aus dem das weiterreflektierte Licht emittiert wird, und einen unteren Bereich umfasst, durch den das von der Lichtleiterplatte (121, 221) reflektierte Licht hindurchtritt,
wobei eine Breite (W1, W3) des unteren Bereichs geringer ist als eine Breite des oberen Bereichs (W2, W4),
wobei die Vorrichtung **dadurch gekennzeichnet ist, dass** sie weiter eine Mehrzahl von Diffusoren (125, 225) umfasst, die auf dem oberen Bereich jeder der prismenförmigen Strukturen (124, 224) integral ausgebildet sind.

2. Lichtleitervorrichtung nach Anspruch 1, wobei die Lichtleiterplatte (121, 221) und die prismenförmigen Strukturen (124, 224) aus einem elastischen Material gebildet sind.

3. Lichtleitervorrichtung nach Anspruch 1 oder 2, wobei die Lichtleiterplatte (121, 221) und die prismenförmigen Strukturen (124, 224) aus einem härtbaren Material gebildet sind.

4. Lichtleitervorrichtung nach Anspruch 2, wobei das elastische Material Polydimethylsiloxan ist.

5. Lichtleitervorrichtung nach einem der vorhergehenden Ansprüche, wobei jede der prismenförmigen Strukturen (124) einen mindestens teilweise ovalen Querschnitt aufweist.

6. Lichtleitervorrichtung nach einem der Ansprüche 1 bis 4, wobei jede der prismenförmigen Strukturen (224) einen trapezförmigen Querschnitt aufweist.

7. Hintergrundbeleuchtung umfassend eine Lichtquelle (210) und die Lichtleitervorrichtung nach einem der vorhergehenden Ansprüche.

8. Verfahren zur Herstellung einer Lichtleitervorrichtung, wobei das Verfahren umfasst:
Ausbilden einer Mehrzahl von Diffusoren (320) auf einem Substrat (310),
Ausbilden einer Opferschicht (330) auf dem Substrat (310), auf dem die Diffusoren (320) ausgebildet sind,
Ätzen der Opferschicht (330), um eine Mehrzahl von prismenförmigen Abschnitten (331, 332, 334), die in ihrer Form einer Mehrzahl von prismenförmigen Strukturen (124, 224) der Lichtleitervorrichtung entsprechen, auf der Opferschicht (330) auszubilden,
Ausbilden der Lichtleitervorrichtung durch Aufbringen eines Materials (340) auf die Opferschicht (330) und die prismenförmigen Abschnitte (331, 332, 334), wobei die Lichtleitervorrichtung die Mehrzahl von prismenförmigen Strukturen (124, 224) aufweist, wobei jede der prismenförmigen Strukturen (124, 224) in einem unteren Bereich eine Breite aufweist, die geringer ist als eine Breite in einem oberen Bereich, und
Trennen der Lichtleitervorrichtung von der Opferschicht (330).

9. Verfahren nach Anspruch 8, wobei das Ausbilden der Mehrzahl von prismenförmigen Abschnitten (334) weiter umfasst:
teilweises Auffüllen eines geätzten Abschnitts der Opferschicht (330) mit einem Füllstoff (335), um eine Dicke der prismenförmigen Abschnitte (334) anzupassen.

10. Verfahren nach Anspruch 8, wobei das Ausbilden der prismenförmigen Abschnitte (334) umfasst:
Positionieren einer Maske (420) mit einer Mehrzahl von Durchtritten, die in einem vorgegebenen Muster strukturiert sind, auf der Opferschicht (330) und
Einstrahlen von UV-Licht an Durchtritten so, dass die auf der Opferschicht (330) ausgebildeten prismenförmigen Abschnitte (331) einen mindestens teilweise ovalen Querschnitt aufweisen.

11. Verfahren nach Anspruch 8, wobei das Ausbilden der Mehrzahl von prismenförmigen Abschnitten (332) umfasst:
Positionieren einer Maske (410) mit einer Mehrzahl von Durchtritten, die in einem vorgegebenen Muster strukturiert sind, auf der Opferschicht (330) und
Einstrahlen von UV-Licht geneigt und symmetrisch durch die Durchtritte so, dass die auf der Opferschicht (330) ausgebildeten prismenförmigen Abschnitte (332) einen trapezförmigen Querschnitt aufweisen.

12. Verfahren nach einem der Ansprüche 9 bis 11, wobei die Lichtleitervorrichtung aus einem elastischen Material gebildet wird.

13. Verfahren nach einem der Ansprüche 9 bis 11, wobei die Lichtleitervorrichtung aus einem härtbaren Material gebildet wird.

14. Verfahren nach einem der Ansprüche 9 bis 13, wobei die Opferschicht aus einem elastischen Material gebildet wird.

## Revendications

1. Dispositif de guidage de lumière comprenant :
une plaque de guidage de lumière (121, 221) pour refléter intérieurement la lumière incidente sur cette dernière ; et
une pluralité de structures en forme de prisme (124, 224) formées de manière solidaire sur la plaque de guidage de lumière (121, 221), les structures en forme de prisme (124, 224) étant prévues pour refléter davantage intérieurement la lumière réfléchie par la plaque de guidage de lumière (121, 221) et émettre la lumière davantage réfléchie, chacune des structures en forme de prisme (124, 224) comprenant une région supérieure, à partir de laquelle la lumière davantage réfléchie est émise, et une région inférieure à travers laquelle la lumière reflétée par la plaque de guidage de lumière (121, 221) passe, une largeur (W1, W3) de la région inférieure étant plus petite qu'une largeur de la région supérieure (W2, W4),
dans lequel le dispositif est **caractérisé en ce qu'**il comprend en outre une pluralité de diffuseurs (125, 225) formés de manière solidaire sur la région supérieure de chacune des structures en forme de prisme (124, 224).

2. Dispositif de guidage de lumière selon la revendication 1, dans lequel la plaque de guidage de lumière (121, 221) et les structures en forme de prisme (124, 224) sont réalisées avec un matériau élastique.

3. Dispositif de guidage de lumière selon la revendication 1 ou 2, dans lequel la plaque de guidage de lumière (121, 221) et les structures en forme de prisme (124, 224) sont réalisées avec un matériau durcissant.

4. Dispositif de guidage de lumière selon la revendication 2, dans lequel le matériau élastique est du polydiméthylsiloxane.

5. Dispositif de guidage de lumière selon l'une quelconque des
revendications précédentes, dans lequel chacune des structures en forme de prisme (124) a une section transversale au moins partiellement ovale.

6. Dispositif de guidage de lumière selon l'une quelconque des revendications 1 à 4, dans lequel chacune des structures en forme de prisme (224) a une section transversale trapézoïdale.

7. Rétroéclairage comprenant une source de lumière (210) et le dispositif de guidage de lumière selon l'une quelconque des revendications précédentes.

8. Procédé pour fabriquer un dispositif de guidage de lumière, le procédé comprenant les étapes consistant à :
former une pluralité de diffuseurs (320) sur un substrat (310) ;
former une couche sacrificielle (330) sur le substrat (310) sur lequel les diffuseurs (320) sont formés ;
graver la couche sacrificielle (330) afin de former une pluralité de parties en forme de prisme (331, 332, 334), correspondant du point de vue de la forme à une pluralité de structures en forme de prisme (124, 224) du dispositif de guidage de lumière, sur la couche sacrificielle (330) ;
former le dispositif de guidage de lumière en appliquant un matériau (340) sur la couche sacrificielle (330) et les parties en forme de prisme (331, 332, 334), le dispositif de guidage de lumière ayant la pluralité de structures en forme de prisme (124, 224), chacune des structures en forme de prisme (124, 224) ayant une largeur de région inférieure qui est plus petite qu'une largeur de région supérieure ; et
séparer le dispositif de guidage de lumière de la couche sacrificielle (330).

9. Procédé selon la revendication 8, dans lequel l'étape consistant à former la pluralité de parties en forme de prisme (334) comprend en outre l'étape consistant à remplir partiellement une partie gravée de la couche sacrificielle (330) avec une matière de remplissage (335) afin d'ajuster une épaisseur des parties en forme de prisme (334).

10. Procédé selon la revendication 8, dans lequel l'étape consistant à former les parties en forme de prisme (334) comprend les étapes consistant à :
positionner un masque (420) ayant une pluralité de trous de passage modélisés selon un modèle prédéterminé sur la couche sacrificielle (330), et
rayonner de la lumière UV à travers les trous de passage de sorte que les parties en forme de prisme (331) formées sur la couche sacrificielle (330) ont une section transversale au moins partiellement en forme d'ovale.

11. Procédé selon la revendication 8, dans lequel l'étape consistant à former la pluralité de parties en forme de prisme (332) comprend les étapes consistant à :
positionner un masque (410) ayant une pluralité de trous de passage modélisés selon un modèle prédéterminé sur la couche sacrificielle (330), et
rayonner de la lumière UV inclinée et symétriquement à travers les trous de passage de sorte que les parties en forme de prisme (332) formées sur la couche sacrificielle (330) ont une section transversale de forme trapézoïdale.

12. Procédé selon l'une quelconque des revendications 9 à 11, dans lequel le dispositif de guidage de lumière est réalisé avec un matériau élastique.

13. Procédé selon l'une quelconque des revendications 9 à 11, dans lequel le dispositif de guidage de lumière est réalisé avec un matériau durcissant.

14. Procédé selon l'une quelconque des revendications 9 à 13, dans lequel la couche sacrificielle est réalisée avec un matériau élastique.
